# EUROPÄISCHE PATENTSCHRIFT

(11) **EP 0 363 526 B1**
(45) Veröffentlichungstag und Bekanntmachung des Hinweises auf die Patenterteilung: **02.06.1993**
(21) Anmeldenummer: 88120845.8
(22) Anmeldetag: 14.12.1988
(51) Int. Cl.: B60S 1/02

(54) **Verfahren zum Betreiben einer Scheibenwaschanlage für Kraftfahrzeuge**
Window-washing arrangement actuating process for a motor vehicle
Procédé pour faire fonctionner un ensemble de lavage de vitres pour véhicules automobiles

(30) Priorität: 03.10.1988 DE 3833579
(43) Veröffentlichungstag der Anmeldung: 18.04.1990
(73) Patentinhaber: VDO Adolf Schindling AG, D-60487 Frankfurt (DE)
(72) Erfinder: Busch, Dieter, D-6365 Rosbach (DE); Allerdist, Heinz, D-6380 Bad Homburg v.d.H. (DE)
(74) Vertreter: Klein, Thomas, Dipl.-Ing. (FH)

(56) Entgegenhaltungen:
- DE-A- 3 047 396
- DE-A- 3 638 336
- FR-A- 2 442 747

## Beschreibung

Die Erfindung betrifft ein Verfahren zum Betreiben einer Scheibenwaschanlage für Kraftfahrzeuge mit zumindest der Frontscheibe zugeordneten Spritzdüsen eines Wasserversorgungssystems mit elektrisch betriebener Wasserpumpe, die in Abhängigkeit von der Fahrgeschwindigkeit des Kraftfahrzeugs auf unterschiedliche Drücke einstellbar ist.

Eine nach einem solchen Verfahren arbeitende Scheibenwaschanlage für Kraftfahrzeuge ist aus der DE-AS 2 002 138 bekannt, ebenso aus DE-A-3 638 336. Bei dieser wird durch die Möglichkeit, den Druck im Wasserversorgungssystem in Abhängigkeit von der Fahrgeschwindigkeit des Kraftfahrzeuges zu variieren, der üblichen Scheibenwaschanlagen innewohnende Nachteil eliminiert, daß der mit bestimmtem Druck aus den Spritzdüsen austretende Waschstrahl sehr stark vom Fahrtwind beeinträchtigt wird und damit zur Reinigung der Scheibe viel zu viel Wasser benötigt wird oder daß die Reinigung unzureichend ist. Unbefriedigend ist bei der aus dieser Schrift bekannten Scheibenwaschanlage aber nach wie vor, daß bei ihr zu Spritzbeginn eventuell zugesetzte Spritzdüsen nicht freigespritzt werden können, da die Wasserpumpe im Wasserversorgungssystem nur einen relativ niedrigen Wasserdruck aufbaut, was insbesondere für das Spritzen bei geringen Fahrgeschwindigkeiten gilt, bei denen nur ein geringer Wasserdruck im Wasserversorgungssystm aufzubringen ist, damit die Wasserstrahlen optimal auf die Scheibe auftreffen und zu einem guten Reinigungsergebnis führen.

So hat es sich in der Praxis gezeigt, daß die Spritzflüssigkeit selbst bei beheizten Zuleitungen in den Spritzdüsen gefriert. So kühlt der Fahrtwind die Spritzdüsen und kompensiert damit den Heizefekt der Zuleitungen, abgesehen hiervon wird das Frieren der Restwassertropfen in den Spritzdüsen durch die Verdunstung der in dem Spritzwasser enthaltenen Reinigungsflüssigkeit begünstigt. Reinigungszusätze in der Flüssigkeit und beheizte Zuleitungen sind damit nicht geeignet, ein Zufrieren der Spritzdüsen bei niedrigen Temperaturen zu verhindern. Abgesehen hiervon können Schnee und Schmutzpartikel die Spritzdüsen zusetzen.

Aufgabe der Erfindung ist es, ein Verfahren zum Betreiben einer Scheibenwaschanlage zu schaffen, bei dem gewährleistet ist, daß ein etwaiger Verschluß des Wasserversorgungssystems nach erfolgter Aktivierung der Scheibenwaschanlage behoben wird und zudem unabhängig von der Fahrgeschwindigkeit des Kraftfahrzeuges ein gleichbleibender Auftreffbereich der Waschflüssigkeit auf die Scheibe, insbesondere die Frontscheibe des Kraftfahrzeuges sichergestellt ist.

Gelöst wird die Aufgabe bei einem Verfahren der genannten Art dadurch, daß die Wasserpumpe bei der Aktivierung der Scheibenwaschanlage einen erhöhten, impulsartigen Wasserdruck im Wasserversorgungssystem aufbaut und anschließend der Wasserdruck fahrgeschwindigkeitsabhängig reguliert wird.

Durch das Aufbringen eines erhöhten, impulsartigen Wasserdruckes im Wasserversorgungssystem ist gewährleistet, daß die Düse bei Spritzbeginn freigespritzt wird. Den Durchtrittsquerschnitt der Spritzdüsen zusetzender Schnee sowie Eis- und Schmutzpartikel werden durch den von der Wasserpumpe im Wasserversorgungssystem aufgebauten Druck schlagartig aus den Spritzdüsen gepreßt und machen dabei den Weg für das anschließend durch die Zuleitungen und die Spritzdüsen bei geringerem Wasserdruck geförderte Waschwasser frei. Der eingangs erzeugte, impulsartige Wasserdruck sollte dabei größer sein als der von der Pumpe bei maximaler Fahrgeschwindigkeit des Kraftfahrzeuges erzeugte Druck im Wasserversorgungssystem.

Es ist vorgesehen, daß die Scheibenwaschanlage auf unterschiedliche Art und Weise in Betrieb gesetzt werden kann. So bietet sich zunächst die Möglichkeit, die Scheibenwaschanlage mittels eines Wisch-Wasch-Schalter zu aktivieren. Daneben besteht die Möglichkeit, den Waschvorgang mittels einer Zeit- und Intervallsteuerung einzuleiten. Als besonders vorteilhaft wird es jedoch angesehen, im Bereich der Frontscheibe Feuchtesensoren anzuordnen, die den Waschvorgang unabhängig von einem Eingreifen des Fahrers einleiten. Es sollten dabei mehrere Feuchtesensoren über die gesamte Scheibenfläche verteilt sein, um so eine optimale Druckmodulation sicherzustellen. Die Feuchtesensoren können beispielsweise wie in der DE-OS 32 03 091 beschrieben ausgebildet sein. Daneben bietet sich eine Kombination der zuvor genannten Steuerungsvarianten der Scheibenwaschanlage an, indem diese sowohl durch die Feuchtesensoren als auch durch die Zeit- und Intervallsteuerung sowie den Wisch-Wasch-Schalter aktivierbar ist.

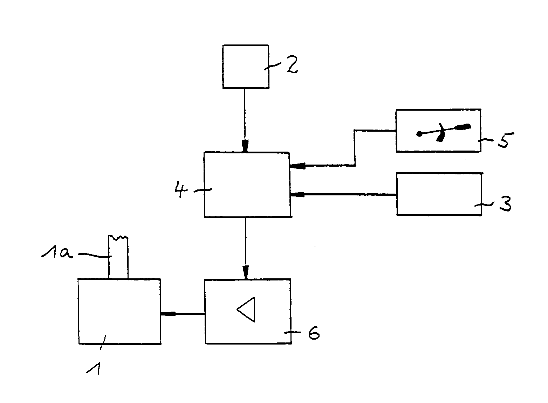

In der Figur sind die einzelnen Steuerungselemente der nach dem erfindungsgemäßen Verfahren betriebenen Scheibenwaschanlage für Kraftfahrzeuge gezeigt.

Eine Pumpe 1 ist in nicht näher verdeutlichter Art und Weise mit einem Waschwasservorratsbehälter verbunden und fördert über eine Zuleitung 1a Waschwasser zu mehreren, gleichfalls nicht näher gezeigten Spritzdüsen, die der Frontscheibe des Kraftfahrzeuges zugeordnet sind. Die Steuerspannung für den Pumpendruck ist unabhängig von der Bordnetzspannung gewählt, so daß Schwankungen der Spannung im Bordnetz keine Einflüsse auf den von der Pumpe erzeugten Druck ausüben. Die Waschwasserpumpe 1 wird in Abhängigkeit eines Geschwindigkeitssignals aus dem elektrischen Tachometer 2, mehrerer Feuchtesensoren 3 an der Frontscheibe, einer Zeit- und Intervallsteuerung 4 und eines Wisch-Wasch-Schalters 5 mit einem Potentiometer gesteuert, wobei der Pumpe 1 ein Verstärker 6 als Leistungsstufe zur Pumpe vorgeschaltet ist.

Die Einstellung des Wasserversorgungssystems ist so gewählt, daß beim Start der Waschwasserpumpe 1, zum Beispiel durch die Feuchtesensoren 3 oder den Wisch-Wasch-Hebel 5 kurzseitig ein impulsartiger Wasserdruck im System aufgebaut wird, der dann sofort geschwindigkeitsabhängig reguliert wird. Zusätzlich ist der Wasserdruck über das Potentiometer im Wisch-Wasch-Hebel 5 regulierbar. Damit wird ohne große Zeitverzögerung das Waschwasser zu dem Wischbereich transportiert, es werden die Spritzdüsen von Schnee- und Schmutzpartikeln freigespült, gleichzeitig der Waschwasserverbrauch stark reduziert. Das System ist so ausgelegt, daß ausgehend von dem erhöhten Anfangsdruck der niedrigste Druck im Wasserversorgungssystem bei stehendem Kraftfahrzeug und der höchste Druck bei hoher Geschwindigkeit erzeugt wird und damit die aus den Spritzdüsen austretenden Wasserstrahlen den Bereich des Wischfeldes der Frontscheibe umfassen. Die Wischdauer kann sich wie üblich aufgrund des Fahrerwunsches ergeben oder auch durch die Zeitvorgabe der Zeit- und Intervallsteuerung, daneben besteht gleichfalls die Möglichkeit, die Nachwischzeit durch die Feuchtesensoren zu steuern.

## Patentansprüche

1. Verfahren zum Betreiben einer Scheibenwaschanlage für Kraftfahrzeuge mit zumindest der Frontscheibe zugeordneten Spritzdüsen eines Wasserversorgungssystems mit elektrisch betriebener Wasserpumpe, die in Abhängigkeit von der Fahrgeschwindigkeit des Kraftfahrzeuges auf unterschiedliche Drücke einstellbar ist,
**dadurch gekennzeichnet,** daß die Wasserpumpe bei der Aktivierung der Scheibenwaschanlage einen erhöhten, impulsartigen Wasserdruck im Wasserversorgungssystem aufbaut und anschließend der Wasserdruck fahrgeschwindigkeitsabhängig reguliert wird.

2. Verfahren nach Anspruch 1, dadurch gekennzeichnet, daß die Scheibenwaschanlage mittels eines an der Frontscheibe angeordneten Feuchtesensors und/oder einer Zeit- und Intervallsteuerung und/oder eines Wisch-Wasch-Schalters aktivierbar ist.

## Claims

1. A method of operating a screen washer unit for motor vehicles, with spray nozzles, associated at least with the windscreen, of a water supply system with an electrically operated water pump which can be adjusted to different pressures depending on the speed of travel of the motor vehicle, characterised in that on activating the screen washer unit the water pump builds up an elevated, pulse-like water pressure in the water supply system and the water pressure is subsequently regulated depending on the speed of travel.

2. A method according to claim 1, characterised in that the screen washer unit can be activated by means of a moisture sensor and/or a time and interval control system and/or a wash-wipe switch disposed on the windscreen.

## Revendications

1. Procédé de mise en service et de fonctionnement d'un équipement lave-glace pour automobile, qui comporte des gicleurs coopérant au moins avec le pare-brise et faisant partie d'un circuit d'alimentation en eau à pompe actionnée électriquement, laquelle peut être réglée à des pressions différentes en fonction de la vitesse de l'automobile, procédé caractérisé en ce que, lorsque l'équipement lave-glace est mis en action, la pompe établit dans le circuit d'alimentation en eau une surpression pulsée, cette pression étant tout aussitôt réglée en fonction de la vitesse de l'automobile.

2. Procédé selon la revendication 1, caractérisé en ce que l'équipement lave-glace peut être mis en service au moyen d'un détecteur d'humidité disposé sur le parebrise, et/ou d'un programmateur à minuterie et/ou d'un inverseur balayage-lavage.
